# EUROPÄISCHE PATENTANMELDUNG

(11) **EP 4 726 234 A1**
(43) Veröffentlichungstag der Anmeldung: **15.04.2026**
(21) Anmeldenummer: 25202622.4
(22) Anmeldetag: 17.09.2025
(51) Int. Cl.: F16H 1/28, F16H 57/021, F16H 57/08

(54) **LAGERANORDNUNG UND GETRIEBE**

(30) Priorität: 14.10.2024 DE 102024209945
(71) Anmelder: ZF Friedrichshafen AG, 88046 Friedrichshafen (DE); ZF Wind Power Antwerpen NV, 3920 Lommel (BE)
(72) Erfinder: Smook, Warren, 3040 Huldenberg (BE)
(74) Vertreter: ZF Friedrichshafen AG

(57) **Zusammenfassung**

Die Erfindung betrifft eine Lageranordnung für ein Getriebe (22). Die Lageranordnung weist wenigstens einen Planetenträger (54), ein stationäres Element (60) und eine Lagerung (94) auf. Der Planetenträger (54) weist einen ersten Endbereich (72) und axial dazu entgegengesetzten zweiten Endbereich (78) auf. Der erste Endbereich (72) ist für eine permanent drehfeste Verbindung mit einer Welle (16) ausgebildet. Der zweite Endbereich (78) bildet einen ersten Lagerbereich (90) aus, an welchem sich die Lagerung (94) mit einer radialen Außenseite abstützt. Das stationäre Element (60) bildet einen zweiten Lagerbereich (92) aus, an welchem sich die Lagerung (94) mit einer radialen Innenseite abstützt. Zudem bezieht sich die Erfindung auf ein Getriebe (22) und eine Windkraftanlage (10).

## Beschreibung

Die vorliegende Erfindung bezieht sich auf eine Lageranordnung für ein Getriebe, welches einen Planetenradsatz aufweist. Zudem bezieht sich die Erfindung auf ein Getriebe und eine Windkraftanlage.

### Stand der Technik

Getriebe können einen Planetenradsatz aufweisen, um eine hohe Übersetzung bereitstellen zu können. Beispielsweise werden solche Getriebe in Windkraftanlagen oder Wasserkraftanlagen eingesetzt, welche dazu dienen, aus Windenergie bzw. Wasserenergie Elektrizität zu erzeugen. Eine Eingangswelle des Getriebes kann dabei mit einer Rotorwelle einer solchen Anlage verbunden sein. Die Rotorwelle kann sich im Betrieb aufgrund von wirkenden Lasten unregelmäßig verformen. Wenn die Eingangswelle des Getriebes steif mit der Rotorwelle verbunden ist, kann es dadurch zu unregelmäßigen Lageabweichungen und Verformungen von Drehelementen des Getriebes kommen, wodurch jeweilige Lagerungen stark belastet werden können. Zudem können Axialkräfte auf die Lagerungen wirken, beispielsweise aufgrund von Schrägverzahnungen bei dem Planetenradsatz.

### Darstellung der Erfindung

Ein erster Aspekt betrifft eine Lageranordnung für ein Getriebe. Das Getriebe kann für eine Drehmomentübertragung von einem Antrieb zu einem Abtrieb ausgebildet sein. Das Getriebe weist beispielsweise wenigstens einen Planetenradsatz auf. Der Antrieb kann beispielsweise durch ein Drehelement des Planetenradsatzes gebildet sein und der Abtrieb durch ein anderes Drehelement des Planetenradsatzes. Das Getriebe kann auch mehrere miteinander wirkverbundene Planetenradsätze aufweisen. Dann kann beispielsweise ein Drehelement eines ersten Planetenradsatzes, wie ein Planetenträger, eine Eingangswelle des Getriebes und ein Drehelement eines zweiten Planetenradsatzes eine Ausgangswelle des Getriebes ausbilden.

Das Getriebe ist beispielsweise als Getriebe einer Windkraftanlage oder Wasserkraftanlage ausgebildet. Eine solche Anlage kann beispielsweise einen Rotor und einen Generator aufweisen. Der Rotor kann über das Getriebe den Generator antreiben, um elektrische Energie zu erzeugen. Der Rotor ist beispielsweise mit dem Getriebe über eine Rotorwelle verbunden. Der Rotor kann eine horizontale oder eine vertikale Drehachse aufweisen. Der Rotor kann beispielsweise zwei, drei, vier oder mehr Rotorblätter aufweisen, welche über eine Nabe mit der Rotorwelle verbunden sind. Die Lageranordnung und damit das Getriebe können auch einen Teil einer Gasturbine oder einer anderen Anlage bilden. Das Getriebe kann ein Getriebegehäuse aufweisen. Das Getriebegehäuse kann beispielsweise ein oder mehrere Gehäuseelemente aufweisen. Das Getriebegehäuse kann einen Innenraum ausbilden. Der Antrieb des Getriebes ist beispielsweise mit dem Rotor mechanisch wirkverbunden und der Abtrieb des Getriebes mit dem Generator. Das Getriebe kann dazu ausgebildet sein, ein Drehmoment von der Rotorwelle an den Generator zu übertragen.

Die Lageranordnung weist wenigstens einen Planetenträger auf. Der Planetenträger kann ein Drehelement des Planetenradsatzes des Getriebes sein. Ein Planetenradsatz ist beispielsweise als Minus-Planetenradsatz oder Plus-Planetenradsatz ausgebildet. Ein Planetenradsatz weist beispielsweise ein Sonnenrad, einen Planetenträger und ein Hohlrad auf. Die Sonnenräder, Planetenträger und Hohlräder eines Planetenradsatzes bilden beispielsweise dessen Drehelemente. Jeder Planetenradsatz kann ein oder mehrere Planetenräder aufweisen, welche drehbar an dem Planetenträger befestigt sind. Die Planetenräder können an dem Planetenträger über Planetenbolzen gelagert sein. Die Planetenbolzen können zu einem Trägerelement separat oder integral ausgebildet sein. Die Planetenräder können an den Planetenbolzen drehbar gelagert sein. Die Planetenbolzen können alternativ oder zusätzlich drehbar an dem Trägerelement gelagert sein. Beispielsweise kämmen die Planetenräder eines Planetenradsatzes jeweils mit einem Sonnenrad und einem Hohlrad eines Planetenradsatzes. Dafür können das Sonnenrad, die Planetenräder und das Hohlrad eines Planetenradsatzes an einem Außenumfang jeweils Verzahnung aufweisen. Die Verzahnung kann als gerade oder schräge Verzahnung ausgebildet sein. Eine Drehachse eines Planetenradsatzes kann einer Drehachse der Drehelemente entsprechen. Jeweilige Planetenradsätze können beispielsweise koaxial mit der Rotorwelle angeordnet sein. Die jeweiligen Drehelemente, der Planetenradsatz oder auch das ganze Getriebe können als Teile der Lageranordnung angesehen werden oder, mit Ausnahme des Planetenträgers, als dazu separate Teile. Im Folgenden ist, sofern von dem Planetenradsatz und dem Planetenträger gesprochen wird, der Planetenträger der Lageranordnung gemeint, welche den im Folgenden beschriebenen ersten Lagerbereich ausbildet sowie der Planetenradsatz, zu welchem dieser Planetenträger gehört.

Die Lageranordnung weist ein stationäres Element auf. Das stationäre Element kann ein Teil des Getriebegehäuses sein und damit ein Gehäuseelement ausbilden. Das stationäre Element ist beispielsweise an einem Fundament oder einem Rahmen festgesetzt. Das stationäre Element kann beispielsweise axial zwischen dem ersten Planetenradsatz und dem zweiten Planetenradsatz des Getriebes angeordnet sein, beispielsweise auf einer dem Antrieb des Getriebes abgewandten Seite des ersten Planetenradsatzes. Das stationäre Element kann permanent drehfest mit einem Hohlrad verbunden sein oder auch durch ein stationäres Hohlrad des Getriebes ausgebildet sein.

Die Lageranordnung weist eine Lagerung auf. Beispielsweise kann die Lagerung zumindest an einer Lagerstelle zwei relativ zueinander drehbare Teile aneinander abstützen. Die Lagerung kann beispielsweise einen rotatorischen Freiheitsgrad aufweisen. Die Lagerung kann zum Lagern des Planetenträgers an dem stationären Element ausgebildet sein. Die Lagerung kann ein oder mehrere Lagerelemente, wie ein Wälzlager oder Gleitlager, aufweisen.

Der Planetenträger weist einen ersten Endbereich und axial dazu entgegengesetzten zweiten Endbereich auf. Die beiden Endbereiche können axiale Endbereiche des Planetenträgers sein. Die beiden Endbereiche können an axial gegenüberliegenden Seiten von an dem Planetenträger gelagerten Planetenrädern angeordnet sein. Der Planetenträger kann einteilig oder mehrteilig ausgebildet sein. Beispielsweise kann der erste Endbereich durch ein erstes Planetenträgerelement und der zweite Endbereich durch ein zweites Planetenträgerelement ausgebildet sein. Die beiden Planetenträgerelemente können permanent drehfest miteinander verbunden sein, beispielsweise durch eine Verschraubung.

Der erste Endbereich ist für eine permanent drehfeste Verbindung mit einer Welle ausgebildet. Dafür kann der erste Endbereich eine radial außenseitige oder innenseitige Verzahnung aufweisen, welche beispielsweise als Steckverzahnung ausgebildet ist. Die Welle kann eine dazu korrespondierende Verzahnung aufweisen, beispielsweise an einem dem ersten Endbereich zugewandten Endbereich der Welle. Die Verbindung kann beispielsweise als Presspassung, Spielpassung oder Übergangspassung ausgebildet sein. Beispielsweise können auch ohne anliegende Drehmomente die Flanken von Zähnen der Verzahnungen der Verbindung aneinander anliegen. Alternativ oder zusätzlich kann der erste Endbereich mit der Welle verschraubbar oder anderweitig verbindbar oder verbunden sein. Bei zwei permanent drehfest verbundenen drehbaren Elementen, wie dem Planetenträger und der Welle, kann eine Rotation des einen Elements immer eine gleichförmige Rotation des anderen Elements verursachen. Beispielsweise dreht der Planetenträger immer mit der gleichen Winkelgeschwindigkeit in die gleiche Richtung wie die Welle. Der Planetenträger und die Welle sind beispielsweise koaxial angeordnet. Die Welle kann Teil der Lageranordnung sein. Die Welle kann eine Welle, wie ein Drehelement, des Getriebes sein oder auch ein zu dem Getriebe separates Bauteil. Die Welle kann eine Antriebswelle sein, mit welcher das Getriebe antreibbar ist. Beispielsweise kann die Welle die Rotorwelle sein. Der Planetenträger kann einen Antrieb des Getriebes ausbilden.

Der zweite Endbereich des Planetenträgers bildet einen ersten Lagerbereich aus, an welchem sich die Lagerung mit einer radialen Außenseite abstützt. Der zweite Endbereich kann eine oder mehrere radial innere Umfangsflächen ausbilden, an welchem die Lagerung anliegt. Das stationäre bildet einen zweiten Lagerbereich aus, an welchem sich die Lagerung mit einer radialen Innenseite abstützt. Das stationäre Bauteil kann eine oder mehrere radial äußere Umfangsflächen ausbilden, an welchem die Lagerung anliegt. Diese äußeren Umfangsflächen können radial innen zu weiteren Abschnitten des stationären Elements angeordnet sein. Sofern mehrere Umfangsflächen vorgesehen sind, können diese axial benachbart sein. Durch diese Anordnung kann der zweite Planetenträger einfach und sicher gelagert werden. Die Lagerung kann einen geringen Durchmesser aufweisen und damit kostengünstig sein. Die Lagerung kann axial neben den Verzahnungen des Planetenradsatzes angeordnet sein. Dadurch können die Wirkdurchmesser der Verzahnungen weitestgehend unabhängig von der Lagerung gewählt werden. Zudem kann die Lagerung durch die zu der permanent drehfesten Verbindung mit der Welle entgegengesetzte Lagerstelle einen großen Hebelarm aufweisen. Dadurch können von dieser Welle wirkende Kräfte gut abgestützt werden. Beispielsweise kommt es so nur zu einer geringen Verkippung und alternativ oder zusätzlich exzentrischen Verlagerung des Planetenträgers. Dadurch können so verursachte zusätzliche Lasten in den Verzahnungen des Planetenradsatzes gering sein und damit eine Lebensdauer hoch sein. Zudem kann eine axiale Länge der Lageranordnung und damit auch des Getriebes gering sein.

Die Lageranordnung kann nur eine einzige Lagerung aufweisen. Der Planetenträger kann nur mit dieser Lagerung gelagert sein. Ansonsten kann sich der Planetenträger beispielsweise nur an der Welle abstützten, welche mit dem Planetenträger an dessen ersten Endbereich permanent drehfest verbunden ist, und mit Verzahnungen an anderen Drehelementen. Die beiden Lagerbereiche können eine einzige Lagerstelle für den Planetenträger ausbilden. Beide Lagerbereiche können in einem gleichen Axialbereich angeordnet sein. Die Lagerung kann zur Aufnahme von Radialkräften und optional auch zur Aufnahme von Axialkräften ausgebildet sein.

In einer Ausführungsform der Lageranordnung kann es vorgesehen sein, dass die Lagerung dazu ausgebildet ist, Axialkräfte aufzunehmen. Beispielsweise kann die Lagerung dazu ausgebildet sein, Axialkräfte in beide Richtungen aufzunehmen. Dadurch kann die Lagerung auch durch jeweilige Drehelemente oder weitere Planetenradsätze mit Schrägverzahnung eingeleitete Axialkräfte abstützen. Dadurch können auch solche Schrägverzahnungen einfach genutzt werden. Beispielsweise kann die Lagerung ein oder mehrere Schrägkugellager oder Kegelrollenlager aufweisen, um Axialkräfte aufzunehmen. Alternativ kann die Lagerung dazu ausgebildet sein, im Wesentlichen nur Radialkräfte aufzunehmen.

In einer Ausführungsform der Lageranordnung kann es vorgesehen sein, dass die Lagerung zwei schräge Wälzlager aufweist, wie beispielsweise zwei Schrägkugellager oder Kegelrollenlager. Dadurch kann die Lagerung radial besonders kompakt sein und trotzdem hohe Lasten aufnehmen. Auch eine Abstützung von Axialkräften in beide Richtungen wird so einfach ermöglicht, beispielsweise durch eine Anordnung mit entgegengesetzter Schrägung. Dadurch kann die Lagerung einen axial zur Verfügung stehenden Bauraum gut ausnutzen.

In einer Ausführungsform der Lageranordnung kann es vorgesehen sein, dass die zwei schrägen Wälzlager eine X-Anordnung haben. Bei einer X-Anordnung kann eine Lage eines Druckmittelpunkts axial zwischen den zwei Wälzlagern sein. Alternativ können die zwei schrägen Wälzlager eine O-Anordnung haben. Bei einer O-Anordnung kann eine Lage eines Druckmittelpunkts axial außerhalb der zwei Wälzlagern sein. Die Lagerung kann eine angestellte Stützlagerung sein. Die Lagerung können vorgespannt sein.

In einer Ausführungsform der Lageranordnung kann es vorgesehen sein, dass eines der beiden Wälzlager größer als das andere der beiden Wälzlager ist. Das größere Wälzlager kann für höhere Lasten ausgelegt sein. Beispielsweise kann das größere der beiden Wälzlager größere Wälzkörper, einen größeren Außendurchmesser und alternativ oder zusätzlich einen kleineren Innendurchmesser aufweisen. Jeweilige Abmessungen, welche nicht in einem größeren Wälzlager resultieren, können identisch groß sein. Beispielsweise können die beiden Wälzlager unsymmetrisch sein. Eine Neigung der Wälzlager kann unterschiedlich sein. Das größere Wälzlager kann beispielsweise dazu ausgebildet sein, größere Lasten aufzunehmen. Eine solche Bauweise kann sinnvoll sein, wenn beispielsweise axiale Lasten durch die Lagerung hauptsächlich in eine Richtung aufgenommen werden müssen. Dies ist beispielsweise der Fall, wenn das Getriebe eine Schrägverzahnung hat und nur oder hauptsächlich in eine Drehrichtung betrieben wird. Beispielsweise drehen die Rotoren von Windkraftanlagen und Wasserkraftanlagen üblicherweise immer nur in eine Richtung, wodurch die Axialkräfte korrespondierend auch nur in eine Richtung wirken. Durch die beschriebene Bauweise kann die Lagerung dann für solche Kräfte optimiert gestaltet werden. Bei unterschiedlich großen Wälzlagern kann einer der beiden Lagerbereiche oder die beiden Lagerbereiche beispielsweise gestuft ausgebildet sein. Beispielsweise kann der erste Lagerbereich einen ersten axialen Teilabschnitt und einen zweiten axialen Teilabschnitt aufweisen, wobei der erste Teilabschnitt einen kleineren Innendurchmesser aufweist als der zweite Teilabschnitt.

In einer Ausführungsform der Lageranordnung kann es vorgesehen sein, dass das stationäre Element einen sich radial erstreckende ersten Wandbereich aufweist. Der erste Wandbereich kann beispielsweise von einer Außenseite des Getriebes bis zu einem Innendurchmesser der Lagerung reichen. Der erste Wandbereich kann einen Innenraum in verschiedene Teilräume trennen. Der erste Wandbereich kann für eine Schmierölversorgung ausgebildet sein, beispielsweise der Lagerung, des Planetenträgers und alternativ oder zusätzlich der Planetenräder. Der erste Wandbereich erstreckt sich beispielsweise entlang des Planetenträgers. Der erste Wandbereich ist beispielsweise axial von dem zweiten Endbereich des Planetenträgers beabstandet.

An den ersten Wandbereich kann sich ein axial in Richtung des Planetenträgers erstreckender zweiter Wandbereich des stationären Elements anschließen. Der erste Wandbereich und der zweite Wandbereich können einstückig oder durch verschiedene miteinander verbundene Bauteile ausgebildet sein. Der zweite Wandbereich kann den zweiten Lagerbereich ausbilden. Der zweite Wandbereich kann auch zur Schmierölversorgung ausgebildet sein. Der zweite Wandbereich kann sich beispielsweise axial komplett entlang der Lagerung erstrecken. Der zweite Wandbereich kann radial innerhalb der Lagerung angeordnet sein. Der zweite Wandbereich ist beispielsweise wenigstens teilweise axial im gleichen Axialbereich wie die Lagerung angeordnet. Der zweite Wandbereich kann sich axial entlang der gesamten Lagerung erstrecken. Der zweite Wandbereich kann axial im gleichen Bereich angeordnet sein, wie der erste Lagerbereich. Der zweite Wandbereich erstreckt sich beispielsweise radial innenseitig zu dem Planetenträger. Der zweite Wandbereich erstreckt sich beispielsweise wenigstens radial innenseitig zu dem zweiten Endbereich des Planetenträgers. Der zweite Wandbereich erstreckt sich beispielsweise radial innenseitig zu dem ersten Lagerbereich.

In einer Ausführungsform der Lageranordnung kann es vorgesehen sein, dass die Lagerung axial gesichert ist. Dadurch kann ein Verrutschen der Lagerung zuverlässig verhindert werden. Zudem können so Axialkräfte gut aufgenommen werden. Die axiale Sicherung der Lagerung kann an dem stationären Element und alternativ oder zusätzlich dem Planetenträger erfolgen. Beispielsweise erfolgt die axiale Sicherung durch Anschläge und alternativ oder zusätzlich Sicherungselemente, wie Sicherungsringe, Schrauben und alternativ oder zusätzlich Unterlegscheiben.

In einer Ausführungsform der Lageranordnung kann es vorgesehen sein, dass die Lageranordnung ein Sonnenrad aufweist. Das Sonnenrad kann das Sonnenrad des Planetenradsatzes sein, zu welchem auch der Planetenträger gehört. Das Sonnenrad kann ein Zahnradelement und ein dazu separates Wellenelement aufweisen, welche permanent drehfest miteinander verbunden. Beispielsweise sind das Zahnradelement und das Wellenelement miteinander verschraubt. Das Sonnenrad ist beispielsweise wenigstens zweiteilig ausgebildet. Dadurch kann eine Montierbarkeit vereinfacht sein. Zudem können größere Wirkdurchmesser bei der Verzahnung des Sonnenrads einfacher realisierbar sein, trotz einer möglicherweise weit radial innen angeordneten Lagerung und der sich radial weit innen erstreckenden Wandabschnitte des stationären Elements.

In einer Ausführungsform der Lageranordnung kann es vorgesehen sein, dass das Zahnradelement einen Außendurchmesser aufweist, welcher größer als ein Innendurchmesser des stationären Elements bei dem zweiten Lagerbereich ist. Dadurch kann eine große Übersetzung realisierbar sein. Die Montierbarkeit kann bei der oben beschriebenen wenigstens zweiteiligen Gestaltung des Sonnenrads einfach sein. Das stationäre Element erstreckt sich beispielsweise über einen Außendurchmesser des Zahnradelements radial nach innen hinaus. Das stationäre Element kann beispielsweise axial versetzt zu dem Zahnradelement angeordnet sein, insbesondere in Richtung des zweiten Endbereichs. Das Zahnradelement kann einen Außendurchmesser aufweist, welcher größer als ein Innendurchmesser des Planetenträgers bei dem zweiten Lagerbereich ist.

Ein zweiter Aspekt betrifft ein Getriebe. Das Getriebe kann die Lageranordnung gemäß dem ersten Aspekt aufweisen, optional ohne die Welle. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden. Der Planetenträger ist beispielsweise über die Lageranordnung in dem Getriebe gelagert.

Ein weiterer Aspekt betrifft eine Anlage mit dem Getriebe gemäß dem ersten Aspekt und alternativ oder zusätzlich mit der Lageranordnung gemäß dem ersten Aspekt. Jeweilige Vorteile und weitere Merkmale sind der Beschreibung des ersten und des zweiten Aspekts zu entnehmen, wobei Ausgestaltungen des ersten bzw. zweiten Aspekts auch Ausgestaltungen des weiteren Aspekts und umgekehrt bilden. Die Anlage kann beispielsweise zur Stromerzeugung ausgebildet sein. Die Anlage kann beispielsweise als Windkraftanlage, Wasserkraftanlage oder Gasturbine ausgebildet sein. Die Anlage kann die Welle, beispielsweise ausgebildet als Rotorwelle, aufweisen. Die Welle kann permanent drehfest mit dem ersten Endbereich des Planetenträgers verbunden sein.

### Kurze Beschreibung der Figuren

Fig. 1 veranschaulicht schematisch eine Windkraftanlage mit einem Getriebe.
Fig. 2 veranschaulicht schematisch in einer seitlichen Schnittansicht eine erste Ausführungsform einer Lageranordnung für das Getriebe der Windkraftanlage gemäß Fig. 1.
Fig. 3 veranschaulicht schematisch in einer seitlichen Schnittansicht eine zweite Ausführungsform einer Lageranordnung für das Getriebe der Windkraftanlage gemäß Fig. 1.

### Detaillierte Beschreibung von Ausführungsformen

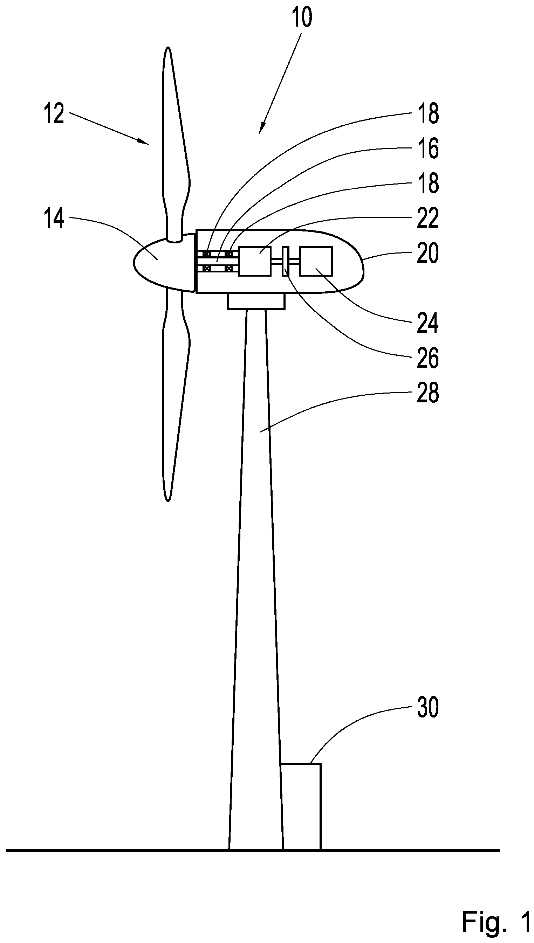

Fig. 1 veranschaulicht eine Windkraftanlage 10 in Horizontalbauweise. Die Windkraftanlage 10 weist einen Rotor 12 auf, welcher über eine Nabe 14 an einer Rotorwelle 16 gehalten ist. Die Drehachse der Rotorwelle 16 erstreckt sich im Wesentlichen horizontal. Im bestimmungsgemäßen Betrieb dreht sich der Rotor 12 und damit auch die Rotorwelle 16 immer nur in eine Richtung. Die Rotorwelle 16 ist über zwei Wälzlager 18 in einer Gondel 20 gelagert. Die Rotorwelle 16 ist über ein Getriebe 22 mechanisch mit einem Generator 24 wirkverbunden. In der Wirkverbindung zwischen Getriebe 22 und Generator 24 ist eine Bremse 26 angeordnet, welche auf eine Eingangswelle des Generators 24 wirkt. Die Gondel 20 ist drehbar an einem oberen Ende eines Turms 28 gelagert, welcher am Boden verankert ist. Die Windkraftanlage 10 ist in einer weiteren Ausführungsform als Off-Shore Anlage ausgebildet. Neben dem Turm 28 weist die Windkraftanlage 10 einen Netzanschluss 30 auf.

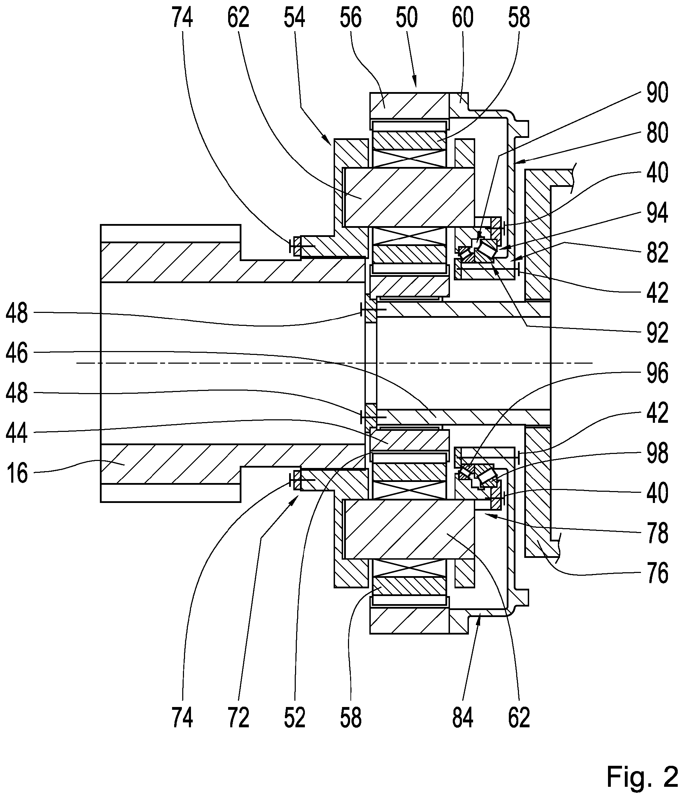

Das Getriebe 22 weist eine Lageranordnung auf, von der eine erste Ausführungsform in Fig. 2 veranschaulicht ist. Das Getriebe 22 weist einen Planetenradsatz 50 auf. Der Planetenradsatz 50 weist ein Sonnenrad 52, einen Planetenträger 54 und ein Hohlrad 56 als Drehelemente auf. An dem Planetenträger 54 sind über jeweils einen Planetenbolzen 62 mehrere Planetenräder 58 drehbar gelagert. Die Planetenräder 58 kämmen jeweils mit Verzahnungen des Hohlrads 56 und des Sonnenrads 52. Das Hohlrad 56 ist an einem stationären Element 60 der Lageranordnung festgesetzt, welches ein Teil eines Gehäuses des Getriebes 22 bildet.

Der Planetenträger 54 bildet einen Teil der Lageranordnung und einen Antrieb des Getriebes 22 aus. Der Planetenträger 54 ist dazu mit der Rotorwelle 16 als eine weitere Welle permanent drehfest verbunden. Dazu bildet ein der Rotorwelle 16 und damit auch dem Rotor 12 axial zugewandter erster Endbereich 72 des Planetenträgers 54 an seinem radialen Innenumfang eine Steckverzahnung aus. Die Rotorwelle 16 bildet an einem dem Planetenträger 54 axial zugewandten Endbereich eine dazu korrespondierende Steckverzahnung an einem Außenumfang aus. Die Rotorwelle 16 und der Planetenträger 54 sind zudem durch mehrere Schrauben 74 aneinander gesichert.

Das Sonnenrad 52 bildet eine Ausgangswelle des Planetenradsatzes 50 des Getriebes 22. In einer Ausführungsform bildet das Sonnenrad 52 auch den Abtrieb des Getriebes 22. In der hier gezeigten Ausführungsform ist das Sonnenrad 52 mit einem weiteren Planetenträger 76 eines weiteren Planetenradsatzes des Getriebes 22 permanent drehfest verbunden, welcher auf einer dem Rotor 12 abgewandten Seite des Planetenradsatzes 50 und damit dem Generator 24 zugewandten Seite des Getriebes 22 angeordnet ist. In einer Ausführungsform bildet dann ein weiteres Sonnenrad dieses weiteren Planetenradsatzes den Abtrieb des Getriebes 22.

Der Planetenträger 54 bildet an einer dem Rotor 12 abgewandten Seite und damit dem Generator 24 zugewandten Seite an einem radialen Innenumfang einen ersten Lagerbereich 90 aus. Der erste Lagerbereich 90 wird so durch einen zu dem ersten Endbereich 72 axial entgegengesetzten zweiten Endbereich 78 ausgebildet, welcher bezüglich der Planetenräder 58 auf einer axial anderen Seite angeordnet ist. Das stationäre Element 60 weist einen sich radial erstreckende ersten Wandbereich 80 auf, an welchen sich ein axial in Richtung des Planetenträgers 54 erstreckender zweiter Wandbereich 82 anschließt. Der zweite Wandbereich 82 bildet einen zweiten Lagerbereich 92 an einem radialen Außenumfang aus.

Der erste Wandbereich 80 ist über einen sich axial erstreckenden und außenseitig zu dem Planetenträger 54 angeordneten dritten Wandbereich 84 mit dem Hohlrad 56 verbunden. Der dritte Wandbereich 84 bildet eine Außenseite des Gehäuses des Getriebes 22 aus.

Die Lageranordnung weist zudem eine Lagerung 94 des Getriebes 22 auf. Die Lagerung 94 stützt sich mit einer radialen Außenseite an dem ersten Lagerbereich 90 und mit einer radialen Innenseite an dem zweiten Lagerbereich 92 ab. Die Lagerung 94 ist für die Aufnahme von Axialkräften und Radialkräften ausgebildet. Die Lagerung 94 weist dafür ein schräges erstes Wälzlager 96 und ein schräges zweites Wälzlager 98 auf. Die beiden schrägen Wälzlager 96, 98 haben eine X-Anordnung. Die Lagerung 94 ist axial so zu der Verbindung des Planetenträgers 54 mit der Rotorwelle 16 positioniert, dass ein Kippen gut verhindert werden kann. Dadurch können zusätzliche Lasten in den Verzahnungen des Planetenradsatzes 50 aufgrund eines Verbiegens der Rotorwelle 16 klein sein. Die Lagerung 94 ist zudem bauraumgünstig in dem Getriebe 22 angeordnet.

Das zweite Wälzlager 98 ist größer als das erste Wälzlager 96. In der gezeigten Ausführungsform weisen beide Wälzlager 96, 98 einen gleichen Innendurchmesser auf. Entsprechend ist der zweite Lagerbereich 92 als durchgehende Umfangsfläche mit einheitlichem Durchmesser ausgebildet. Jeweilige Wälzkörper und ein Außendurchmesser des zweiten Wälzlagers 98 sind größer als bei dem ersten Wälzlager 96. Der erste Lagerbereich 90 ist entsprechend gestuft ausgebildet. Die Lagerung 94 ist so dazu ausgebildet, mehr Axialkräfte in Richtung des zweiten Endbereichs 78 und damit in Richtung des Generators 24 aufzunehmen als in Richtung des ersten Endbereichs 72 und damit des Rotors 12.

Die Lagerung 94 ist axial gesichert. Dazu weist der erste Lagerbereich 90 einen Anschlag in Richtung des ersten Endbereichs 72 auf. In einer dazu entgegengesetzten Richtung ist die Lagerung 94 durch Schrauben 40 und Unterlegscheiben gesichert. In einer Variante ist die Lagerung 94 an dem ersten Lagerbereich 90 eingespannt. Zudem weist der zweite Lagerbereich 92 dazu einen Anschlag in Richtung weg von dem ersten Endbereich 72 auf. In Richtung zu dem ersten Endbereich 72 ist die Lagerung 94 durch Schrauben 42 und Unterlegscheiben gesichert. In einer Variante ist die Lagerung 94 an dem zweiten Lagerbereich 92 eingespannt. Die axiale Sicherung ermöglicht einen einfachen Einbau entlang der Drehachse des Getriebes 22. Die Schrauben 40, 42 werden in dem gezeigten Beispiel aus einer Richtung entgegengesetzten zu dem ersten Endbereich 72 festgezogen.

Das Sonnenrad 52 weist in der gezeigten Ausführungsform eine zweiteilige Bauweise auf. Das Sonnenrad 52 weist ein Zahnradelement 44 und ein dazu separates Wellenelement 46 aufweist, welche permanent drehfest miteinander verbunden sind. Zu diesem Zweck sind Schrauben 48 und Unterlegscheiben vorgesehen, welche durch die als Hohlwelle ausgebildete Rotorwelle 16 festziehbar sind. Das Zahnradelement 44 weist einen Außendurchmesser auf, welcher größer als ein Innendurchmesser des stationären Elements 60 in dem zweiten Wandbereich 82 und damit bei dem zweiten Lagerbereich 92 ist. Die Lagerung 94 wird in einer Ausführungsform montiert, bevor das Zahnradelement 44 an dem Wellenelement 46 montiert wird.

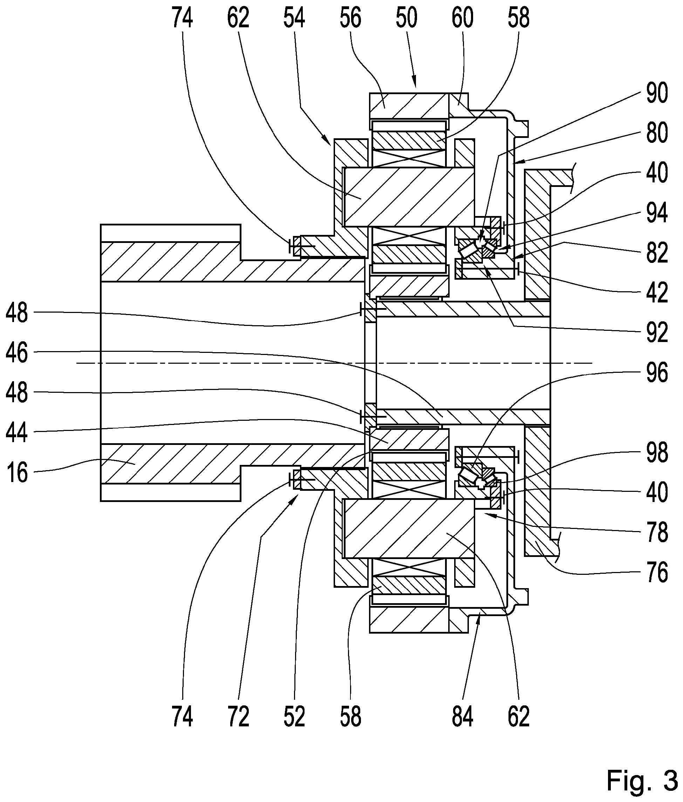

In Fig. 3 ist eine zweite Ausführungsform der Lageranordnung des Getriebes 22 veranschaulicht. Es werden lediglich Unterschiede zu der ersten Ausführungsform erläutert. Bei der zweiten Ausführungsform ist das axial dem ersten Endbereich 72 und damit dem Rotor 12 zugewandte erste Wälzlager 96 größer als das zweite Wälzlager 98 ausgebildet. Bei dieser Ausführungsform der Lagerung 94 ist ein Außendurchmesser der beiden Wälzlager 96, 98 identisch. Eine den ersten Lagerbereich 90 bildenden radiale Innenumfangsfläche kann durchgehend ausgebildet sein, wobei axial zwischen den beiden Wälzlagern 96, 98 hier eine Entlastungskerbe vorgesehen ist. Die Wälzkörper des ersten Wälzlagers 96 ist größer, wodurch ein Innendurchmesser kleiner als bei dem zweiten Wälzlager 98 ist. Der zweite Lagerbereich 92 in dem zweiten Wandbereich 82 des stationären Elements 60 ist deshalb bei der zweiten Ausführungsform gestuft ausgebildet. Die Lagerung 94 gemäß der zweiten Ausführungsform kann größere Axialkräfte in Richtung des Rotors 12 aufnehmen. In dem gezeigten Beispiel werden diese durch eine entsprechende Schrägverzahnung in dem zweiten Planetenradsatz verursacht.

### Bezugszeichen

- 10: Windkraftanlage
- 12: Rotor
- 14: Nabe
- 16: Rotorwelle / Welle
- 18: Wälzlager
- 20: Gondel
- 22: Getriebe
- 24: Generator
- 26: Bremse
- 28: Turm
- 30: Netzanschluss
- 40, 42, 48, 74: Schrauben
- 44: Zahnradelement
- 46: Wellenelement
- 50: Planetenradsatz
- 52: Sonnenrad
- 54: Planetenträger
- 56: Hohlrad
- 58: Planetenräder
- 60: stationäres Element
- 62: Planetenbolzen
- 72: erster Endbereich
- 76: weiterer Planetenträger
- 78: zweiter Endbereich
- 80: erster Wandbereich
- 82: zweiter Wandbereich
- 84: dritter Wandbereich
- 90: erster Lagerbereich
- 92: zweiter Lagerbereich
- 94: Lagerung
- 96: erstes Wälzlager
- 98: zweites Wälzlager

## Patentansprüche

1. Lageranordnung für ein Getriebe (22), wobei die Lageranordnung wenigstens einen Planetenträger (54), ein stationäres Element (60) und eine Lagerung (94) aufweist, wobei der Planetenträger (54) einen ersten Endbereich (72) und einen axial dazu entgegengesetzten zweiten Endbereich (78) aufweist, wobei der erste Endbereich (72) für eine permanent drehfeste Verbindung mit einer Welle (16) ausgebildet ist, wobei der zweite Endbereich (78) einen ersten Lagerbereich (90) ausbildet, an welchem sich die Lagerung (94) mit einer radialen Außenseite abstützt, und wobei das stationäre Element (60) einen zweiten Lagerbereich (92) ausbildet, an welchem sich die Lagerung (94) mit einer radialen Innenseite abstützt.

2. Lageranordnung nach Anspruch 1, **dadurch gekennzeichnet, dass** die Lagerung (94) dazu ausgebildet ist, Axialkräfte aufzunehmen.

3. Lageranordnung nach Anspruch 2, **dadurch gekennzeichnet, dass** die Lagerung (94) zwei schräge Wälzlager (96, 98) aufweist.

4. Lageranordnung nach Anspruch 3, **dadurch gekennzeichnet, dass** die zwei schrägen Wälzlager (96, 98) eine X-Anordnung haben.

5. Lageranordnung nach Anspruch 3 oder 4, **dadurch gekennzeichnet, dass** eines der beiden Wälzlager (96; 98) größer als das andere der beiden Wälzlager (98; 96) ist.

6. Lageranordnung nach einem der vorhergehenden Ansprüche, **dadurch gekennzeichnet, dass** das stationäre Element (60) einen sich radial erstreckenden ersten Wandbereich (80) aufweist, an welchen sich ein axial in Richtung des Planetenträgers (54) erstreckender zweiter Wandbereich (82) anschließt, wobei der zweite Wandbereich (82) den zweiten Lagerbereich (92) ausbildet.

7. Lageranordnung nach einem der vorhergehenden Ansprüche, **dadurch gekennzeichnet, dass** die Lagerung (94) axial gesichert ist.

8. Lageranordnung nach einem der vorhergehenden Ansprüche, **dadurch gekennzeichnet, dass** die Lageranordnung ein Sonnenrad (52) aufweist, wobei das Sonnenrad (52) ein Zahnradelement (44) und ein dazu separates Wellenelement (46) aufweist, welche permanent drehfest miteinander verbunden.

9. Lageranordnung nach Anspruch 8, **dadurch gekennzeichnet, dass** das Zahnradelement (44) einen Außendurchmesser aufweist, welcher größer als ein Innendurchmesser des stationären Elements (60) bei dem zweiten Lagerbereich (92) ist.

10. Getriebe mit einem Planetenradsatz (50) und einer Lageranordnung nach einem der vorhergehenden Ansprüche.

11. Windkraftanlage (10) mit einem Getriebe nach Anspruch 10.
